# EUROPÄISCHE PATENTSCHRIFT

(11) **EP 3 394 840 B1**
(45) Veröffentlichungstag und Bekanntmachung des Hinweises auf die Patenterteilung: **11.01.2023**
(21) Anmeldenummer: 16779095.5
(22) Anmeldetag: 10.10.2016
(51) Int. Cl.: G07F 9/06, F16B 21/09, G07F 19/00, G07F 5/06

(54) **GELDAUTOMAT**
AUTOMATED TELLER MACHINE
DISTRIBUTEUR AUTOMATIQUE DE MONNAIE

(30) Priorität: 21.12.2015 DE 102015122370
(43) Veröffentlichungstag der Anmeldung: 31.10.2018
(73) Patentinhaber: KEBA Handover Automation GmbH, 4040 Linz (AT)
(72) Erfinder: BAUMANN, Claus, 4041 Linz (AT)
(74) Vertreter: Horn Kleimann Waitzhofer Patentanwälte PartG mbB
(86) Internationale Anmeldenummer: PCT/EP2016/074226
(87) Internationale Veröffentlichungsnummer: WO 2017/108220

(56) Entgegenhaltungen:
- AT-U1- 10 716
- FR-A1- 2 587 134
- US-A- 2 858 921
- US-A- 5 619 932
- US-A- 5 716 154
- US-A- 5 873 446

## Beschreibung

### [TECHNISCHES GEBIET]

Die Erfindung betrifft einen Geldautomat zum Auszahlen von Bargeld an einen Kunden.

### [STAND DER TECHNIK]

Ein Geldautomat ist ein technisches Gerät zur Bargeldabhebung in Selbstbedienung bei Geld- und Kreditinstituten. Standardmäßig sind solche Geldautomaten mit einem Auszahlmodul ausgestaltet, welches dazu eingerichtet ist, einen von einem Kunden angeforderten Geldbetrag in Form von Banknoten an diesen auszuzahlen.

Des Weiteren ist es bekannt, Geldautomaten mit einem Zusatzmodul auszurüsten, welches dazu eingerichtet ist, den von dem Kunden angeforderten Geldbetrag ganz oder teilweise in Münzgeld auszugeben. Bekannte Zusatzmodule umfassen u.a. zumeist mehrere Dockingstationen, welche fest in einem entsprechenden Geldautomaten vorgesehen sind. An den Dockingstationen ist jeweils eine Bevorratungsvorrichtung zum Bevorraten von Münzgeld lösbar befestigbar. Solche Bevorratungsvorrichtungen werden auch als Münzhopper bezeichnet. Mehrere Bevorratungsvorrichtungen innerhalb eines Geldautomaten halten üblicherweise Münzgeld unterschiedlichen Werts vor, so dass der exakte, vom Kunden angeforderte Auszahlbetrag durch Kombination unterschiedlichen Münzgelds gebildet werden kann.

Ist der Vorrat an Münzgeld innerhalb ein oder mehrerer der Bevorratungsvorrichtungen eines Geldautomats aufgebraucht oder neigt sich dieser zu Ende, so werden diese entnommen, mit Münzgeld aufgefüllt und wieder eingesetzt. Die Entnahme setzt ein Verschwenken der entsprechenden Bevorratungsvorrichtung voraus. Zu diesem Zweck ist eine jeweilige Dockingstation mit einem Mechanismus ausgerüstet, welcher es erlaubt, eine jeweils zugeordnete Bevorratungsvorrichtung aus ihrer vertikalen Stellung in eine schräge Stellung zu verschwenken und dann aus der Dockingstation auszuhängen. Die wieder befüllte Bevorratungsvorrichtung wird in die schräge Stellung verbracht, daraufhin in den Mechanismus der Dockingstation eingehängt und anschließend wieder in die vertikale Stellung verschwenkt.

Das Verschwenken der Bevorratungsvorrichtung relativ zur Dockingstation bedingt, dass die Dockingstation nicht bis zu einem Anschlag an eine Rückwand in dem Geldautomaten herangesetzt werden kann. Vielmehr muss ein Abstand zur Rückwand verbleiben. Auch oberhalb einer jeweiligen Bevorratungsvorrichtung muss genügend Platz vorgesehen sein, um die Schwenkbewegung ausführen zu können. Schließlich kann das Neigen einer entsprechenden Bevorratungsvorrichtung dazu führen, dass Münzgeld aus dieser herausfällt.

US 5,873,446 offenbart eine Bevorratungsvorrichtung für Münzen. Diese umfasst ein Gehäuse, in welchem eine Münzlade entnehmbar gehalten ist. Ferner ist eine Verriegelungsvorrichtung vorgesehen, welche dazu eingerichtet ist, das Entnehmen der Münzlade zu sperren.

### [OFFENBARUNG DER ERFINDUNG]

Es ist eine Aufgabe der vorliegenden Erfindung, einen verbesserten Geldautomaten zu schaffen. Insbesondere ist es eine Aufgabe, einen Geldautomaten bereitzustellen, bei welchem eine Bevorratungsvorrichtung zum Bevorraten von Münzgeld einfach entnommen bzw. eingesetzt und platzsparend in dem Geldautomaten untergebracht werden kann.

Die gestellten Aufgaben werden durch einen Geldautomaten mit den Merkmalen des Anspruchs 1 gelöst.

Aufgrund der ausschließlich linearen Relativbewegung kommt es zu keinem Verkippen der Bevorratungsvorrichtung. Entsprechend kann die Bevorratungsvorrichtung unmittelbar angrenzend an eine Rückwand des Geldautomaten positioniert werden. Ferner wird kein Platz oberhalb der Bevorratungsvorrichtung für das Befestigen der Bevorratungsvorrichtung an der Dockingstation benötigt. Schließlich besteht aufgrund der ausschließlich linearen Relativbewegung keine Gefahr, dass Münzgeld aus der Bevorratungsvorrichtung herausfällt.

Die Dockingstation kann in Gestalt eines Podests ausgebildet sein. Ferner kann die Dockingstation teilweise oder vollständig aus Metallblech gefertigt sein.

Die Bevorratungsvorrichtung kann eine Aufnahme, insbesondere einen Trichter, zur Bevorratung des Münzgelds aufweisen. Ferner kann die Bevorratungsvorrichtung eine Abzähleinrichtung zum Abzählen des Münzgelds umfassen.

Das Ineingriffbringen der ersten und zweiten Führungseinrichtung umfasst insbesondere einen Formschluss in positiver (nach oben) und negativer (nach unten) vertikaler Richtung. Entsprechend ist damit eine Verschieblichkeit der Bevorratungsvorrichtung relativ zur Dockingstation ausschließlich in horizontaler Richtung gegeben. Grundsätzlich kann es sich bei der ersten oder zweiten Führungseinrichtung beispielsweise um Schienen, Profilteile, Schlitze, Nuten, insbesondere T-Nuten, oder ein sonstiges Aufnahmeelement handeln. Das andere von dem ersten und zweiten Führungselement ist bzw. als ein korrespondierendes Eingriffselement, insbesondere eine Schiene, ein Profilteil, ein Keder, eine Kulisse, ein Zapfen oder dergleichen ausgebildet, welches mit dem Aufnahmeelement formschlüssig zusammenwirkt, um die ausschließlich lineare Führung zu bewerkstelligen.

Der Geldautomat kann auch als Bankautomat, Bankomat oder Geldausgabeautomat bezeichnet werden.

Bei einer Ausführungsform weist der Geldautomat eine Buchse und einen Stecker auf. Der Stecker ist dazu eingerichtet, für das Herstellen einer elektrischen Verbindung in die Buchse eingesteckt zu werden, wobei das Einstecken des Steckers in die Buchse durch die ausschließlich lineare Bewegung der Bevorratungseinrichtung relativ zu der Dockingstation erfolgt. Vorteilhaft wird die elektrische Verbindung somit schlicht durch Verschieben der Bevorratungsvorrichtung relativ zu der Dockingstation geschaffen. Bei bekannten Lösungen dagegen wird ein Kabel mit Überlänge verbaut, welche es erlaubt, die Bevorratungseinrichtung zunächst mit dem Kabel zu verbinden und diese dann an der Dockingstation zu befestigen. Ein solches Kabel aus dem Stand der Technik benötigt nachteilig Platz. Außerdem kann es die Bewegung der Bevorratungsvorrichtung relativ zu der Dockingstation behindern oder selbst Schaden nehmen. Schließlich sind bei der vorliegend vorgeschlagenen Lösung keine weiteren Handgriffe erforderlich, um die Buchse und den Stecker miteinander elektrisch zu verbinden. Mit Hilfe der Buchse und des Steckers lässt sich eine elektrische Einrichtung, insbesondere eine Abzähleinrichtung zum Abzählen des auszugebenden Münzgeldes, der Bevorratungsvorrichtung mit einem Steuermodul des Geldautomats elektrisch verbinden.

Bei einer weiteren Ausführungsform umfasst der Geldautomat eine Rückwand. Die Rückwand weist eines von dem Stecker und der Buchse und die Bevorratungsvorrichtung das andere von dem Stecker und der Buchse auf. Indem also die Bevorratungsvorrichtung zu der Rückwand hin bewegt wird, gelangen Stecker und Buchse zur Herstellung der elektrischen Verbindung elektrisch leitend in Eingriff. Die Rückwand kann eine Rückwand einer Münzlade des Geldautomats sein. Das andere von dem Stecker und der Buchse kann ebenfalls an einer Rückwand der Bevorratungsvorrichtung vorgesehen sein.

Weiter umfasst der Geldautomat eine Verriegelungseinrichtung. Diese ist dazu eingerichtet, für ein Befestigen der Bevorratungsvorrichtung an der Dockingstation diese in einer Endlage zu einem Ende der ausschließlich linearen Bewegung miteinander zu verriegeln. Das heißt, dass in einem ersten Schritt die Bevorratungsvorrichtung und die Dockingstation mit Hilfe der ersten und zweiten Führungseinrichtung miteinander in Eingriff gebracht werden. Dieser Eingriff sorgt dafür, dass die Bevorratungsvorrichtung ausschließlich linear relativ zu der Dockingstation beweglich geführt ist. Zu einem Ende der ausschließlichen linearen Bewegung gelangt die Bevorratungsvorrichtung in die Endlage. In dieser wird die Bevorratungsvorrichtung endgültig relativ zu der Dockingstation mit Hilfe der Verriegelungseinrichtung durch Verriegeln derselben fixiert (verriegelte Stellung der Verriegelungseinrichtung). Soll die Bevorratungsvorrichtung nun entnommen werden, so wird die Verriegelungseinrichtung entriegelt (entriegelte Stellung der Verriegelungseinrichtung), die Bevorratungsvorrichtung aus ihrer Endlage heraus ausschließlich linear zurückbewegt und dann aus ihrem Eingriff mit der Dockingstation entnommen, wobei die erste und zweite Führungseinrichtung außer Eingriff miteinander gebracht werden. Mit Hilfe der Verriegelungseinrichtung kann also vorteilhaft eine definierte Position der Bevorratungsvorrichtung relativ zu der Dockingstation gewährleistet werden.

Ferner ist die Verriegelungseinrichtung dazu eingerichtet, die Bevorratungsvorrichtung in die Endlage zu bewegen und dort mit der Dockingstation zu verriegeln, wobei bevorzugt in der Endlage der Stecker in die Buchse eingesteckt ist. Damit ergibt sich eine besonders einfache Bedienung für den Nutzer. Insbesondere kann so die Relativposition von Stecker und Buchse in der Endlage genau gesteuert werden, was einerseits deren Lebensdauer und andererseits einem guten elektrischen Kontakt zwischen diesen zuträglich sein kann.

Bei einer Ausführungsform weist die Verriegelungseinrichtung einen Übertotpunkt-Mechanismus auf. Der Übertotpunkt-Mechanismus sorgt dafür, dass die Verriegelungseinrichtung dazu tendiert, in ihrer verriegelten Stellung zu verbleiben. Dadurch wird vorteilhaft ein ungewolltes, d. h. selbsttätiges, Entriegeln der Verriegelungseinrichtung vermieden. Ferner kann die Verriegelungseinrichtung samt Übertotpunkt-Mechanismus so beschaffen sein, dass bei Überschreiten des Übertotpunkts der Bedienerperson eine haptische Rückmeldung gegeben wird, dass der Übertotpunkt überschritten wurde. Insbesondere wird diese haptische Rückmeldung durch eine plötzliche Reduzierung der erforderlichen Betätigungskraft, um die Verriegelungseinrichtung in ihre verriegelte Stellung zu bewegen, erzeugt. Gleichsam erhöht sich die zur Entriegelung erforderliche Kraft plötzlich bei einer Betätigung der Verriegelungseinrichtung zum Entriegeln derselben.

Ferner weist die Verriegelungseinrichtung eine Kulisse und ein korrespondierendes Kulissenelement auf. Das Kulissenelement ist für das Verriegeln der Bevorratungsvorrichtung mit der Dockingstation und/oder das Bewegen der Bevorratungsvorrichtung in die Endlage in der Kulisse verlagerbar. Insbesondere kann die Kulisse als Schlitz oder Nut ausgebildet sein. Die Kulisse kann einen ersten und einen zweiten Abschnitt aufweisen, wobei der erste und zweite Abschnitt zueinander abgewinkelt orientiert sind. Der erste Abschnitt erstreckt sich vorzugsweise in Richtung der ausschließlich linearen Bewegung der Bevorratungsvorrichtung relativ zu der Dockingstation, der zweite Abschnitt vorzugsweise winkelig, insbesondere senkrecht dazu. Das Kulissenelement kann beispielsweise als Nutstein oder Zapfen ausgebildet sein.

Noch weiterhin ist die Kulisse an einer Bodenplatte der Bevorratungsvorrichtung ausgebildet. Es umfasst ein an der Dockingstation verschwenkbar gelagerter Hebel das Kulissenelement. Ferner ist der Hebel für das Verriegeln der Bevorratungsvorrichtung mit der Dockingstation verschwenkbar. Mit Hilfe des Hebels kann eine Betätigung der Verriegelungseinrichtung für die Bedienerperson einfach zugänglich gestaltet werden. Insbesondere kann ein Griffteil des Hebels vor einer Vorderwand der Bevorratungsvorrichtung angeordnet sein, wenn diese sich in ihrer Endlage befindet.

Durch Verwendung eines Hebels als Betätigungselement können vorteilhaft die Hebelverhältnisse so gewählt werden, dass - bei einer zu erwartenden, durchschnittlichen Betätigungskraft - die entsprechenden Reaktionskräfte, bspw. die Lösekraft zum Abziehen des Steckers von der Buchse sowie Reibkräfte zwischen der Kulisse und dem Kulissenelement, überwunden werden, ohne jedoch die Bevorratungsvorrichtung zu stark beschleunigen. Dies gewährleistet ein ruckfreies Lösen sowie eine günstige Dynamik, wodurch die Gefahr eines Herausfallens des Münzgeldes aus der Bevorratungsvorrichtung noch weiter verringert wird.

Bei einer weiteren Ausführungsform bildet der Hebel zusammen mit einem Schlitz in einem Deckelement, insbesondere Deckblech, der Dockingstation den Übertotpunkt-Mechanismus aus. Der Schlitz kann einen gekrümmten Verlauf aufweisen. Dadurch kann eine Verspannung zwischen dem Deckelement und dem Hebel bei dem Verschwenken desselben in und aus der Verriegelungsstellung und somit der Übertotpunkt-Mechanismus geschaffen werden.

Bei einem nicht erfindungsgemäßen Beispiel weist die Verriegelungseinrichtung eine Rast und eine korrespondierende Gegenrast auf. Die Rast ist mit der Gegenrast für das Verriegeln der Bevorratungsvorrichtung mit der Dockingstation in Eingriff bringbar. Das Ineingriffbringen erfolgt dabei vorzugsweise in einer Richtung senkrecht zu der Richtung, entlang derer die ausschließlich lineare Bewegung der Bevorratungsvorrichtung relativ zur Dockingstation erfolgt. Die Rast kann beispielsweise als Haken, die Gegenrast als Öffnung, insbesondere als Durchtritt oder Tasche, ausgebildet sein.

Bei einem nicht erfindungsgemäßen Beispiel weist die Dockingstation eines von der Rast und der Gegenrast und die Bevorratungseinrichtung das andere von der Rast und der Gegenrast auf. Bevorzugt gelangt die Gegenrast durch ein Überfahren der Rast mit dieser in Eingriff. Weiter bevorzugt erfolgt das Überfahren durch die ausschließlich lineare Bewegung der Bevorratungsvorrichtung relativ zu der Dockingstation. Vorteilhaft kommt es somit zu einem selbsttätigen Eingriff von Rast und Gegenrast. "Selbsttätig" meint, dass keine externe Energie erforderlich ist, um die Rast und Gegenrast miteinander in Eingriff zu bringen. Insbesondere erfolgt das Ineingriffbringen mit Hilfe federelastischer Kräfte. Vorzugsweise erfolgt der Eingriff von Rast und Gegenrast in der Endlage der Bevorratungsvorrichtung relativ zur Dockingstation, also zu einem gewünschten Ende der ausschließlich linearen Bewegung. Dadurch kann die Bevorratungsvorrichtung einfach an der Dockingstation befestigt werden.

Bei einem nicht erfindungsgemäßen Beispiel ist die Rast an einem an der Dockingstation befestigten Hebel ausgebildet. Bevorzugt ist die Gegenrast an einer Bodenplatte der Bevorratungsvorrichtung vorgesehen. Weiter bevorzugt ist der Hebel für das Ineingriffbringen der Rast und der Gegenrast verbiegbar. Vorzugsweise ist der Hebel ganz oder teilweise als eine Blattfeder ausgebildet. Weiter vorzugsweise ist er an seinem einen Ende an der Dockingstation befestigt, beispielsweise angeschraubt oder angenietet. Das andere Ende des Hebels ist bevorzugt frei, kann also von einer Bedienerperson betätigt, insbesondere verbogen werden, um dadurch eine insbesondere an einer Oberseite des Hebels angeordnete Rast zu bewegen. Die Bewegung der Rast erfolgt dabei bevorzugt auf einer Kreislinie nach oben (für das Verriegeln) und nach unten (für das Entriegeln). "Oben" und "unten" beziehen sich vorliegend auf die Schwerkraftrichtung.

Bei einem weiteren nicht erfindungsgemäßen Beispiel ist die Rast als ein herausgebogener Blechhaken und/oder die Gegenrast als Öffnung ausgebildet. Sowohl der Blechhaken wie auch die Öffnung lassen sich einfach herstellen.

Bei einer weiteren Ausführungsform umfasst der Geldautomat Schlitze und Zapfen. Die Zapfen sind dazu eingerichtet, jeweils in einen der Schlitze einzugreifen und/oder einen einen jeweiligen Schlitz begrenzenden Randbereich über zumindest einen Teil der ausschließlich linearen Bewegung der Bevorratungsvorrichtung relativ zur Dockingstation hinweg zu hintergreifen. Die erste Führungseinrichtung weist eines von den Schlitzen und den Zapfen und die zweite Führungseinrichtung das jeweils andere von den Schlitzen und den Zapfen auf. Die Schlitze können insbesondere eine Schlüssellochform mit einer Öffnung und einem in diese einmündenden Kanal aufweisen. Die Zapfen können insbesondere jeweils eine Pilzform aufweisen. Der entsprechende Pilzkopf lässt sich durch die Öffnung des Schlitzes in vertikaler Richtung einführen. Anschließend lässt sich ein Schaft des Pilzes in den Kanal in horizontaler Richtung einführen, was der ausschließlich linearen Bewegung der Bevorratungsvorrichtung relativ zu der Dockingstation entspricht. Dabei hintergreift der Pilzkopf den den jeweiligen Kanal begrenzenden Randbereich der Dockingstation.

Bei einer weiteren Ausführungsform umfasst der Geldautomat Haken und einen Plattenkörper. Der Plattenkörper ist zwischen den Haken geführt. Alternativ oder zusätzlich können die Haken den Plattenkörper über zumindest einen Teil der ausschließlich linearen Bewegung der Bevorratungsvorrichtung relativ zu der Dockingstation hinweg hintergreifen. Die erste Führungseinrichtung weist eines von den Haken und dem Plattenkörper und die zweite Führungseinrichtung das jeweils andere von den Haken und dem Plattenkörper auf. Die Haken können insbesondere als Haken ausgebildet sein, welche den Plattenkörper zumindest in der Endlage der Bevorratungsvorrichtung relativ zur Dockingstation umgreifen. Die Haken können als aus einem Deckelement der Dockingstation herausgebogene oder an dieses angeschweißt sonst wie befestigt sein.

Bei einer weiteren Ausführungsform weist die Bevorratungsvorrichtung einen Aufnahmebehälter für das Münzgeld und eine Bodenplatte auf. Die Bodenplatte ist, insbesondere lösbar, an dem Aufnahmebehälter befestigt. Bevorzugt kann die Dockingstation ein Deckelement, insbesondere ein Deckblech, umfassen, auf welchem die Bevorratungsvorrichtung, insbesondere deren Bodenplatte, für die ausschließlich lineare Bewegung der Bevorratungsvorrichtung relativ zu der Dockingstation gleitend verschieblich gelagert ist. Die Bodenplatte kann an dem Aufnahmebehälter angeclipst sein. Die Verwendung einer Bodenplatte hat den Vorteil, dass Standardaufnahmebehälter verwendet und für die vorliegend gewünschte Anwendung modifiziert werden können. Die Dockingstation aus Blech herzustellen führt zu einem einfachen Fertigungsprozess.

Bei einer weiteren Ausführungsform weist die Bodenplatte eines von der ersten und zweiten Führungseinrichtung und das Deckelement das andere von der ersten und zweiten Führungseinrichtung auf.

Bei einer weiteren Ausführungsform umfasst der Geldautomat ein Automatengehäuse und eine Münzlade. Die Münzlade ist in das Automatengehäuse hinein und aus diesem heraus verschieblich beweglich vorgesehen. Bevorzugt weist die Münzlade die Dockingstation auf. Vorteilhaft umfasst die Münzlade mehrere Dockingstationen, welchen jeweils eine Bevorratungsvorrichtung zugeordnet ist. Indem die Münzlade aus dem Automatenkörper herausbewegt werden kann, ist nur eine kleine Öffnung in dem Automatenkörper erforderlich, um es einer Bedienerperson zu gestatten, an die ein oder mehreren Dockingstationen samt zugeordneter Bevorratungsvorrichtungen zu gelangen.

Gemäß einem weiteren Aspekt wird ein Dienstleistungsautomat zum Auszahlen von Bargeld an einen Kunden, mit einer Dockingstation, welche eine erste Führungseinrichtung aufweist, und einer Bevorratungsvorrichtung zum Bevorraten von Münzgeld, welche eine zweite Führungseinrichtung aufweist, wobei die erste und zweite Führungseinrichtung dazu eingerichtet sind, miteinander derart in Eingriff gebracht zu werden, dass die Bevorratungsvorrichtung ausschließlich linear relativ zu der Dockingstation beweglich geführt ist, bereitgestellt.

Unter einem Dienstleistungsautomat werden insbesondere Verkaufs- und Bankautomaten verstanden. Beispielsweise kann der Dienstleistungsautomat ein Geldautomat, ein Fahrscheinautomat, eine Vending-Maschine, ein Kontoinformationsterminal, ein Lottoterminal, ein Paketautomat zum Versenden oder Empfangen von (Post-)Paketen oder ein Check-in-Terminal sein. Die für den Geldautomaten vorliegend beschriebenen Merkmale gelten entsprechend für den Dienstleistungsautomaten.

Die Erfindung wird nachfolgend anhand der in den schematischen Figuren angegebenen Ausführungsbeispiele näher erläutert. Es zeigen:
- Fig. 1: in einer perspektivischen Ansicht einen Geldautomaten gemäß einer Ausführungsform;
- Fig. 2: in einer perspektivischen Ansicht eine Münzlade des Geldautomaten aus Fig. 1;
- Fig. 3: die Ansicht aus Fig. 2, wobei eine Bevorratungsvorrichtung aus der Münzlade entnommen ist;
- Fig. 4: perspektivisch eine Rückansicht der aus der Münzlade der Fig. 3 entnommenen Bevorratungsvorrichtung;
- Fig. 5: eine Ansicht von schräg unten aus Fig. 4;
- Fig. 6: in perspektivischer Ansicht eine Bodenplatte der Bevorratungsvorrichtung aus Fig. 5;
- Fig. 7: in einer Ansicht von schräg unten einen Aufnahmebehälter der Bevorratungsvorrichtung aus Fig. 5;
- Fig. 8: ein verdecktes Detail VIII aus Fig. 3;
- Fig. 9: in perspektivischer Ansicht einen Hebel aus Fig. 8;
- Fig. 10: in perspektivischer Ansicht eine Münzlade gemäß einem nicht erfindungsgemäßen Beispiel, wobei eine Bevorratungsvorrichtung derselben entnommen ist;
- Fig. 11: in einer Ansicht von schräg unten die aus der Münzlade der Fig. 10 entnommene Bevorratungsvorrichtung;
- Fig. 12: in einer perspektivischer Ansicht eine Bodenplatte der Bevorratungsvorrichtung aus Fig. 11;
- Fig. 13: in einer perspektivischen Ansicht die Bodenplatte aus Fig. 12 in einem Zustand, in welchem sie auf einer Dockingstation der Münzlade aus Fig. 10 angeordnet ist;
- Fig. 14: die Ansicht aus Fig. 13 ohne die Bodenplatte; und
- Fig. 15: die Ansicht aus Fig. 14, wobei ein Deckelement der Dockingstation aus Fig. 14 nicht gezeigt und damit der Blick auf einen Hebel unterhalb des Deckelements freigegeben ist.

In allen Figuren sind gleiche bzw. funktionsgleiche Mittel und Einrichtungen - sofern nichts anderes angegeben ist - mit denselben Bezugszeichen versehen.

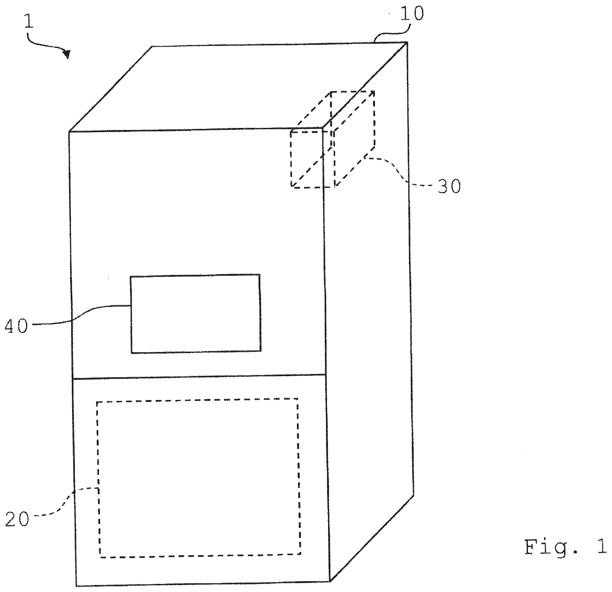

Fig. 1 zeigt in einer perspektivischen Ansicht einen Geldautomaten 1 gemäß einem Ausführungsbeispiel. Anstelle des Geldautomaten 1 könnte es sich auch um jeden anderen Dienstleistungsautomaten handeln.

Der Geldautomat 1 umfasst ein Automatengehäuse 10. Das Automatengehäuse 10 kann beispielsweise eine zylinderförmige Gestalt mit rechteckiger Grundfläche aufweisen.

In dem Automatengehäuse 10 ist ein gestrichelt angedeuteter, weil verdeckter Safe 20 vorgesehen. In dem Safe 20 werden Banknoten vorgehalten.

Ferner umfasst der Geldautomat eine Münzlade 30, welche ebenfalls gestrichelt, weil verdeckt, dargestellt ist. Die Münzlade 30 ist von einer Rückseite des Automatengehäuses 10 her zugänglich. Dabei kann sie aus dem Automatengehäuse 10 durch die Rückwand bzw. durch eine entsprechende Öffnung in der Rückwand hindurch aus diesem herausverlagert werden (sog. Rearload-Geräte). Zu diesem Zweck kann die Münzlade 30 auf einem nicht dargestellten Schienensystem verschieblich gelagert sein. Nach einem Befüllen der Münzlade 30 bzw. in Fig. 1 nicht gezeigter Bevorratungsvorrichtungen derselben mit Münzgeld durch eine Bedienerperson wird die Münzlade 30 wieder zurück in das Automatengehäuse 10 geschoben. Fig. 1 zeigt dabei die eingeschobene Stellung der Münzlade 30 in grob schematischer Darstellung. Je nach Konfiguration kann die Münzlade 30 auch von einer Vorderseite des Automatengehäuses 10 her zugänglich sein. In diesem Fall ist die Münzlade 30 durch eine entsprechende Öffnung in der Vorderwand hindurch aus dem Automatengehäuse 10 heraus verlagerbar (sog. Frontload- Geräte).

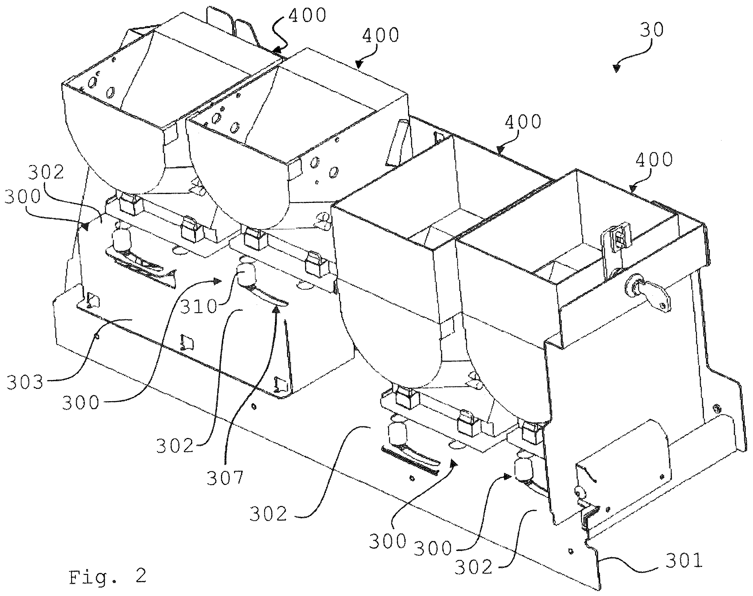

Ferner umfasst der Geldautomat 1 eine Benutzerschnittstelle 40. Die Benutzerschnittstelle 40 kann in eine Vorderwand des Automatengehäuses 10 integriert sein. Mit Hilfe der Benutzerschnittstelle 40 kann ein Benutzer den Geldautomaten 1 zur Auszahlung eines bestimmten Geldbetrags auffordern. Nach erfolgreicher Autorisierung zahlt der Geldautomat 1 den angeforderten Geldbetrag aus. Dieser kann sich aus Banknoten und Münzgeld zusammensetzen. Entsprechend gibt der Geldautomat 1 dann über ein Geldentnahmefach den gewünschten Betrag an den Benutzer bzw. Kunden aus, wobei Banknoten aus dem Safe 20 entnommen und in das Ausgabefach befördert werden. Das Münzgeld dagegen wird mit Hilfe der genannten Bevorratungsvorrichtungen (nachfolgend näher in Zusammenhang mit den Fig. 2 ff. erläutert) der Münzlade 30 bereitgestellt und in demselben oder einem weiteren Geldentnahmefach ausgegeben.

Fig. 2 zeigt in perspektivischer Ansicht die Münzlade 30 aus Fig. 1 gemäß einer Ausführungsform.

Die Münzlade 30 umfasst mehrere, beispielsweise vier Dockingstationen 300, welche auf einem Träger 301 angeordnet sind. Der Träger 301 kann als Blech- oder Kunststoffteil gebildet sein. Die Dockingstationen 300 können jeweils ein Deckblech 302 umfassen, welches einstückig in den Träger 301 integriert ist (siehe die beiden in Fig. 2 rechten Dockingstationen 300). Alternativ kann das Deckblech 302 als Oberseite eines Blechsockels 303 ausgebildet sein, welcher auf den Träger 301 aufgesetzt und mit diesem fest verbunden ist (siehe die beiden in Fig. 2 linken Dockingstationen 300).

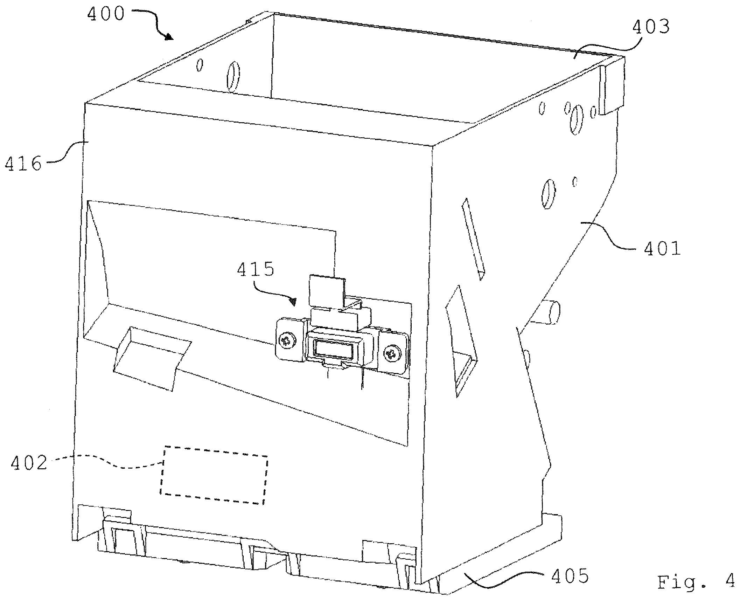

Auf einer jeweiligen Dockingstation 300 ist eine Bevorratungsvorrichtung 400 lösbar befestigt. Der Aufbau der Bevorratungsvorrichtungen 400 wird nachfolgend noch näher Bezug nehmend auf die Fig. 4 bis 7 erläutert.

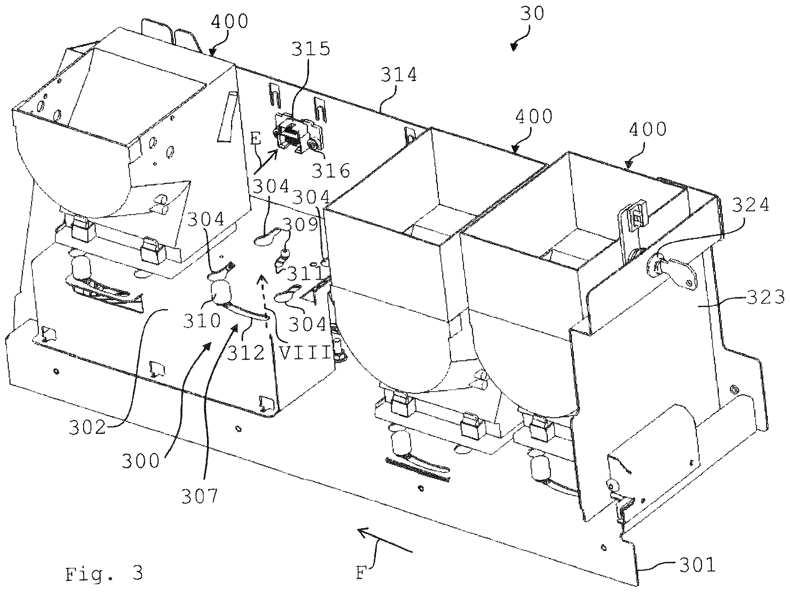

Fig. 3 zeigt die Ansicht aus Fig. 2, wobei jedoch eine der Bevorratungsvorrichtungen 400 entnommen ist. Das somit nahezu vollständig sichtbare Deckblech 302 der Dockingstation 300 umfasst eine erste Führungseinrichtung 304 in Form von beispielsweise vier Schlitzen. Die Schlitze sind auch in der Ansicht VIII aus

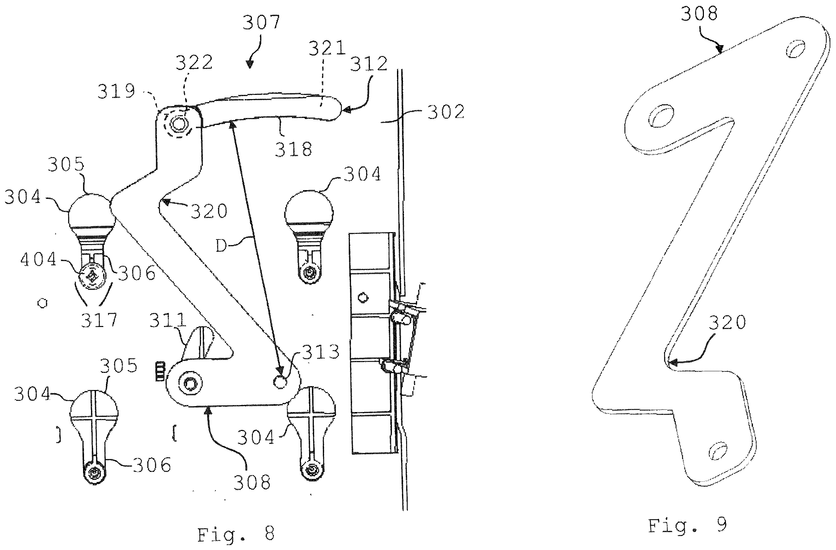

Fig. 8 zu erkennen, welche eine Sicht von unten auf das Deckblech 302 zeigt. Ein jeweiliger Schlitz 304 kann in Gestalt eines Schlüssellochs ausgebildet sein. Das heißt, dass der Schlitz 304 eine in Fig. 8 näher gezeigte kreisförmige Öffnung 305 und einen darin einmündenden Kanal 306 umfasst.

Die Dockingstation 300 umfasst ferner eine Verriegelungseinrichtung 307 (s. Fig. 2, 3 und 8) für ein Befestigen der Bevorratungsvorrichtung 400 an der Dockingstation 300, wie nachfolgend noch näher erläutert wird. Die Verriegelungseinrichtung 307 umfasst dazu einen Hebel 308. Dieser ist, wie in den Fig. 8 und 9 gezeigt, an der Unterseite des Deckblechs 302 in einem Anlenkpunkt 313 angelenkt. Der Hebel 308 kann beispielsweise eine Z-förmige Gestalt aufweisen. Der Hebel 308 trägt an seinem einen Ende ein Kulissenelement in Form eines Zapfens 309 (s. Fig. 3) und an seinem anderen Ende einen Griff 310. Sowohl der Zapfen 309 als auch der Griff 310 ragen von dem Hebel 308 durch einen jeweils zugeordneten Schlitz 311 bzw. 312 des Deckblechs 302 nach oben hindurch. Der Griff 310 bildet zusammen mit dem Schlitz 312 einen Übertotpunkt-Mechanismus aus, welcher im Einzelnen noch näher erläutert wird.

Zurückkommend zu Fig. 3, ist dort gezeigt, dass an dem Träger 301, welcher die horizontal orientierten Deckelbleche 302 aufweist, ferner eine vertikal angeordnete Rückwand 314 angebracht ist. An der Rückwand 314 ist ein Stecker 315, beispielsweise mit Hilfe von Schrauben 316, fixiert.

Fig. 4 zeigt in einer perspektivischen Ansicht von schräg oben die Bevorratungsvorrichtung 400, welche aus der Münzlade 30 (s. Fig. 3) entnommen wurde. Die Bevorratungsvorrichtung 400 umfasst einen Aufnahmebehälter 401. Der Aufnahmebehälter 401 kann einen Trichter 403 umfassen, in den das Münzgeld von oben eingefüllt werden kann. Ferner kann die Bevorratungsvorrichtung 400 eine Abzähleinrichtung 402 aufweisen, welche, weil verdeckt, nur gestrichelt angedeutet ist. Die Abzähleinrichtung 402 ist dazu eingerichtet, eine definierte Menge des Münzgeldes aus dem Trichter 403 abzuzählen und an einen nicht weiter dargestellten Ausgabeschacht auszugeben. Zum Zweck des Abzählens des Münzgeldes kann die Abzähleinrichtung 402 einen Sensor, beispielsweise einen optischen Sensor, aufweisen.

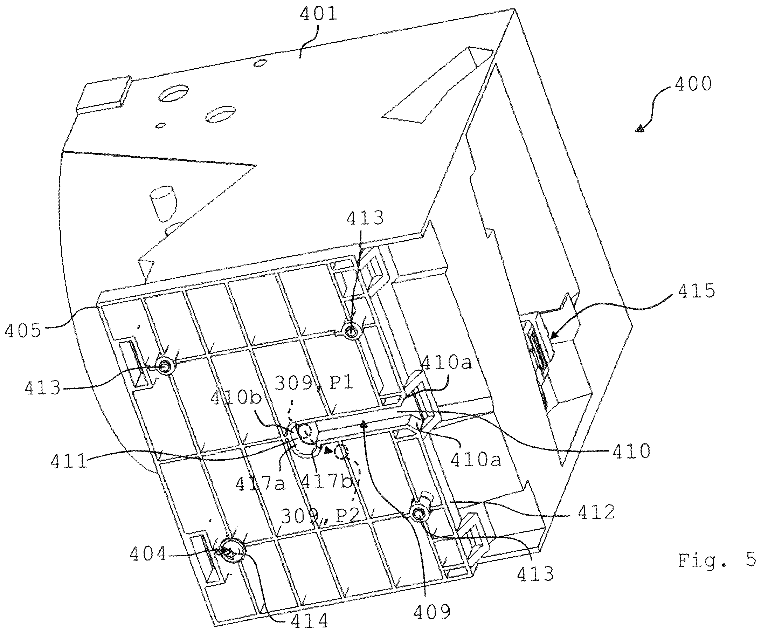

Fig. 5 zeigt die Bevorratungsvorrichtung 400 aus Fig. 4 in einer Ansicht von schräg unten.

Dort ist ein Teil einer zweiten Führungseinrichtung 404 in Form einer Schraube gezeigt, welche in eine Bodenplatte 405 der Bevorratungsvorrichtung 400 eingeschraubt ist. Die Schraube 404 umfasst eine Schraubenkopf 414. Es wird darauf hingewiesen, dass lediglich eine Schraube 404 gezeigt ist. An der Position der Schraubenlöcher 413 werden weitere Schrauben 404 (nicht gezeigt) vor der Montage der Bevorratungsvorrichtung 400 auf der zugeordneten Dockingstation 300 eingeschraubt. Die Schrauben 404 bilden gemeinsam die zweite Führungseinrichtung 404.

Weiter ist in den Fig. 4 und 5 gezeigt, dass die Bevorratungsvorrichtung 400 eine Buchse 415 aufweist. Die Buchse 415 ist an einer Rückseite 416 des Aufnahmebehälters 401 angeordnet. Die Buchse 415 korrespondiert mit dem Stecker 315 (siehe Fig. 3), d.h., der Stecker 315 und die Buchse 415 sind für eine elektrische Verbindung miteinander in Eingriff bringbar. Über den Stecker 315 und die Buchse 415 wird in einem Betriebszustand des Geldautomaten 1 die Abzähleinrichtung 402 mit Strom versorgt und/oder es können entsprechende Steuersignale über die elektrische Verbindung übertragen werden.

In einer alternativen Ausführungsform könnte der Stecker 315 an der Bevorratungsvorrichtung 400 und die Buchse 415 an der Rückwand 314 angeordnet sein.

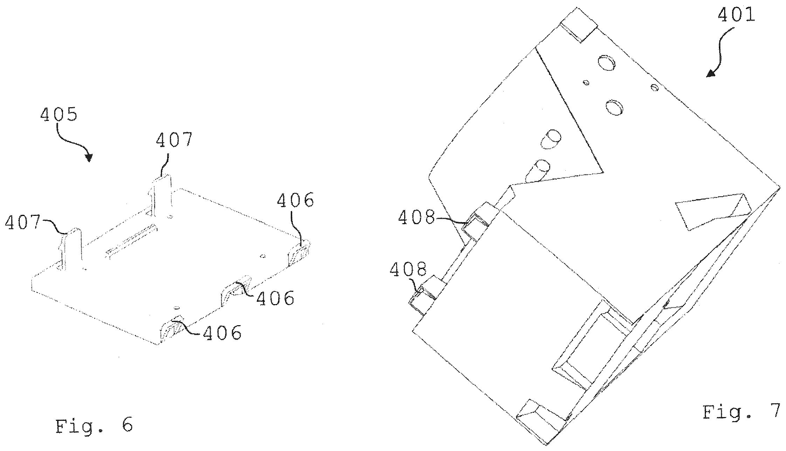

Fig. 6 zeigt die Bodenplatte 405 in einer perspektivischen Ansicht von schräg oben. Fig. 7 zeigt den Aufnahmebehälter 401 von schräg unten (ohne Bodenplatte).

Die Bodenplatte 405 ist an den Aufnahmebehälter 401 angeclipst. Die Bodenplatte 405 umfasst dazu federelastische Laschen 406 sowie federelastische Haken 407, welche mit korrespondierenden Elementen 408 an der Unterseite des Aufnahmebehälters 401 lösbar in Eingriff bringbar sind. Der einfachen Darstellung halber sind lediglich zwei der korrespondierenden Eingriffselemente 408 gezeigt.

Nun zurückkehrend zu Fig. 5 ist dort dargestellt, dass die Bodenplatte 405 eine Kulisse 409 in Form einer Nut aufweist. Die Nut 409 setzt sich aus einem ersten Abschnitt 410 und einem zweiten Abschnitt 411 zusammen. Der erste Abschnitt 410 erstreckt sich von einem äußeren Rand 412 der Bodenplatte 405 in Richtung Mitte der Bodenplatte 405. Der zweite Abschnitt 411 verläuft gegenüber dem ersten Abschnitt 410 abgewinkelt, beispielsweise um 90° abgewinkelt. Die Nut 409 bzw. die Abschnitte 410, 411 können geradlinig oder bogenförmig ausgebildet sein.

Nachfolgend wird nun die Montage der Bevorratungsvorrichtung 400, wie insbesondere in Fig. 5, gezeigt, auf der zugeordneten Dockingstation 300, wie insbesondere in Fig. 3 gezeigt, erläutert:
In einem ersten Schritt wird die Bevorratungsvorrichtung 400 in vertikaler Richtung auf das Deckblech 302 abgesetzt, wobei dann die Schraubenköpfe 414 durch die korrespondierenden Öffnungen 305 (siehe Fig. 8) in den Schlitzen 304 in vertikaler Richtung hindurchbewegt werden. Anschließend wird die Bevorratungsvorrichtung 400 horizontal in Richtung der Rückwand 314 auf dem Deckblech 302 geschoben. Diese Richtung, vorliegend auch Einschubrichtung genannt, ist mit dem Bezugszeichen E in Fig. 3 bezeichnet. Die Bodenplatte 405 gleitet auf dem Deckblech 302. Dabei kommt es, sobald ein jeweiliger Schraubenkopf 414 einen jeweiligen Kanal 306 (siehe Fig. 8) begrenzenden Randbereich 317 hintergreift, zu einem Formschluss zwischen der Bevorratungsvorrichtung 400 und der Dockingstation 300 in vertikaler Richtung nach oben und nach unten. Dadurch, dass insgesamt vier Schrauben 404 vorgesehen sind, erfolgt die Bewegung in horizontaler Richtung auch ausschließlich linear. Insbesondere ein Verkippen der Bevorratungsvorrichtung 400 ist nicht erforderlich bzw. nicht möglich.

Mit weiterer Bewegung der Bevorratungsvorrichtung 400 in Richtung der Rückwand 314 gelangt der Zapfen 309 in den ersten Abschnitt 410 der Nut 409. Ein Einfädeln des Zapfens 309 in den ersten Abschnitt 410 kann durch Einführschrägen 410a am Eingang des ersten Abschnitts 410 unterstützt werden. Der erste Abschnitt 410 erstreckt sich dabei in der Einschubrichtung E. Es ist zu beachten, dass der Zapfen 309 wie auch der Griff 310 in Fig. 3 bereits in der Verriegelungsstellung gezeigt sind. In deren Entriegelungsstellung, wie für das Einsetzung bzw. Einschieben der Bevorratungsvorrichtung 400 erforderlich, sind diese jeweils an einem in Fig. 3 rechtsseitigen Ende der Schlitze 311 bzw. 312 angeordnet.

Zum Ende des ersten Abschnitts 410 erreicht der Zapfen 309 eine Zwischenposition P1, in welcher er an der endseitigen Wandung 410b des ersten Abschnitts 410 anschlägt. Eine weitere Bewegung der Bevorratungsvorrichtung 400 in Richtung der Einschubrichtung E ist dann gesperrt und erfordert eine Betätigung der Verrieglungseinrichtung 307.

Zu diesem Zweck wird der Griff 310 manuell aus seiner in Fig. 3 nicht gezeigten rechten Lage in seine in Fig. 3 gezeigte linke Lage verbracht. Dabei wird der Zapfen 309 in den zweiten Abschnitt 411 (siehe Fig. 5) verlagert, wobei er die mit P2 bezeichnete Endposition einnimmt. In dieser Endposition des Zapfens 309 besteht ein Formschluss zwischen diesem mit gegenüberliegenden Wandungen 417a, 417b des zweiten Abschnitts 411, wie in Fig. 5 gezeigt. Der Formschluss bezieht sich hier auf die in Fig. 3 mit E bezeichnete Einschubrichtung der Bevorratungsvorrichtung 400. Ferner ergibt sich aufgrund der bogenförmigen Bahn, auf welcher der Zapfen 309 verschoben wird (siehe auch den entsprechend geformten Schlitz 311), dass dieser gegen die Wandung 417b des zweiten Abschnitts 411 wirkt und dabei die Bevorratungsvorrichtung 400 in ihre Endlage relativ zu der Dockingstation 300 verschiebt.

Mit der Bewegung des Zapfens 309 aus der Zwischenposition P1 in die Endposition P2 und der korrespondierenden Bewegung der Bevorratungsvorrichtung 400 fährt schließlich auch die Buchse 415 gegen den Stecker 315 auf, so dass der Stecker 315 in die Buchse 415 eingesteckt wird. Dadurch kommt es zur elektrischen Verbindung zwischen diesen.

In der Endlage ist die Bevorratungsvorrichtung 400 mit Hilfe der Verriegelungseinrichtung 307 mit der Dockingstation 300 verriegelt, d.h. an dieser fest befestigt, so dass eine Relativbewegung in allen sechs Freiheitsgraden gesperrt ist. Die Verriegelungseinrichtung 307 befindet sich dabei in ihrer Verriegelungsstellung.

Ferner ist der Schlitz 312 bevorzugt dergestalt, dass er einen ersten Abschnitt 318 und einen zweiten Abschnitt 319 umfasst, wie in Fig. 8 dargestellt. Ein Abstand D zwischen dem ersten Abschnitt 318 und dem Anlenkpunkt 313 ist so bemessen, dass der Hebel 308, insbesondere ein V-förmiger Abschnitt 320 desselben, federelastisch aufgespreizt ist, solange sich der Griff 319 in dem ersten Abschnitt 318 des Schlitzes 312 bewegt. Dadurch entstehen Reibkräfte zwischen dem Griff 310 und einem Randbereich des ersten Abschnitts 318 des Schlitzes 312. Entsprechend spürt die Bedienerperson beim Bewegen des Griffs 310 aus dessen mit 321 bezeichneten Stellung, welche einer Entriegelungsstellung der Verriegelungseinrichtung 307 entspricht, einen Widerstand.

Erreicht der Griff nun die mit 322 in Fig. 8 bezeichnete Stellung, welche einer Verriegelungsstellung der Verriegelungseinrichtung 307 entspricht, so kommt es zu einer Entspannung des Hebels 308 bzw. insbesondere des V-förmigen Abschnitts 320 desselben. Dies ist darauf zurückzuführen, dass sich der zweite Abschnitt 319 ausgehend von dem ersten Abschnitt 318 aufweitet, was zu einer Reduzierung der Distanz D führt. Damit geht auch ein haptisch erfahrbares Zurückschnappen des Griffs 310 einher, was dem Bediener die Rückmeldung gibt, dass er nun die Verrieglungsstellung erreicht hat. Aus der Stellung 322 des Griffs 310 lässt sich dieser nur mit einem gewissen Kraftaufwand herausbewegen, da dazu ein elastisches Aufspreizen des Hebels 308 bzw. des V-förmigen Abschnitts 320 erforderlich ist und damit einhergehend auch Reibkräfte überwunden werden müssen. Ein selbsttätiges Entriegeln der Verriegelungseinrichtung 307 kann damit sicher vermieden werden.

Außerdem gewährleistet die Verriegelungseinrichtung 307, dass die elektrische Verbindung zwischen dem Stecker 315 und der Buchse 415 aufrechterhalten wird. Eine elektrische Entkopplung kann nur erfolgen, wenn zuvor die Verriegelungseinrichtung 307 entriegelt wurde.

Vorteilhaft liegt der Griff 310 in der Einschubrichtung E vor der Bevorratungsvorrichtung 400, wie in Fig. 2 zu sehen, und kann damit von einer Bedienerperson einfach erreicht und betätigt werden.

Das Entnehmen und Wiedereinsetzen einer entsprechenden Bevorratungsvorrichtung 400 erfolgt insbesondere mit dem Ziel, die Bevorratungsvorrichtung 400 wieder mit Münzgeld zu befüllen. Ferner kann auf demselben Wege ein Austausch einer defekten Bevorratungsvorrichtung 400 erfolgen.

Nach erfolgtem Wiederauffüllen bzw. Austausch einer oder mehrerer der Bevorratungsvorrichtungen 400 wird die Münzlade 30 mit Hilfe des erwähnten Schienensystems in das Automatengehäuse 10 (siehe Fig. 1) hineinbewegt. Beispielsweise kann der Träger 301 Teil dieses Schienensystems sein. Das Einschieben der Münzlade 30 erfolgt in der mit F bezeichneten Einschubrichtung. Insbesondere können die Bevorratungsvorrichtungen 400 entlang der Einschubrichtung F hintereinander aufgereiht in der Münzlade 30 angeordnet sein.

Weiterhin kann die Münzlade 30 ein Schließblech 323 umfassen. Das Schließblech 323 schließt mit der Rückwand des Automatengehäuses 10 im eingeschobenen Zustand der Münzlade 30 bündig ab. In diesem Zustand kann die Münzlade 30 mit dem Automatengehäuse 10 mit Hilfe eines Schlosses 324 verriegelt werden. Damit ist die Münzlade 30, insbesondere das in dieser bevorratete Münzgeld, vor dem Zugriff Unbefugter geschützt.

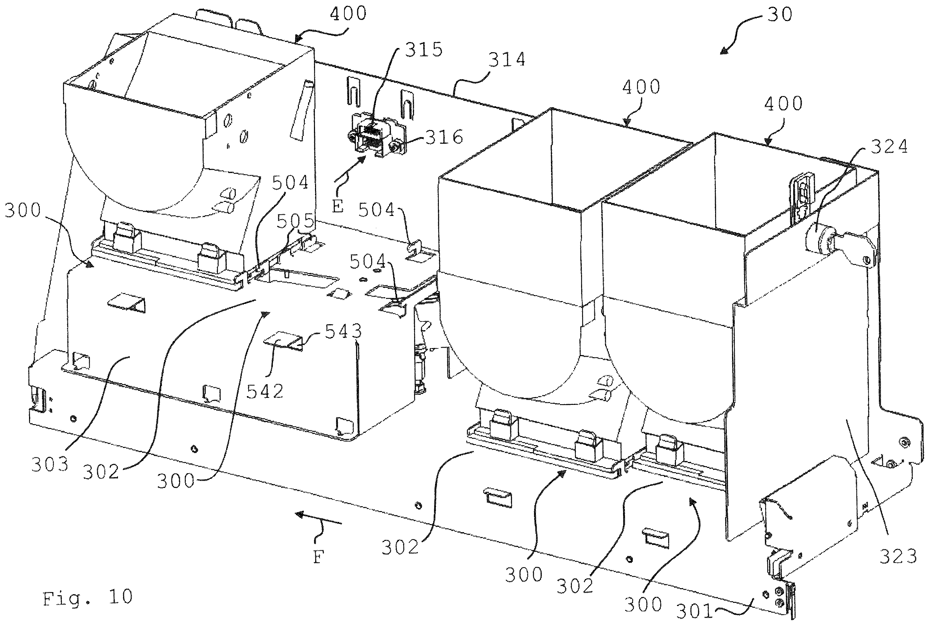

Fig. 10 zeigt die Ansicht aus Fig. 3, wobei jedoch eine Münzlade 30 gemäß einem nicht erfindungsgemäßen Beispiel gezeigt ist. Nachfolgend wird lediglich auf die relevanten Unterschiede gegenüber dem Ausführungsbeispiel gemäß den Fig. 3 - 9 eingegangen.

Anstelle der Schlitze 304 weist die Dockingstation 300 Haken 504 auf. Zusätzlich zu den Haken 504 können Laschen 505 vorgesehen sein. Die Haken 504 und Nasen 505 können durch Herausbiegen aus dem Deckblech 302 erzeugt sein.

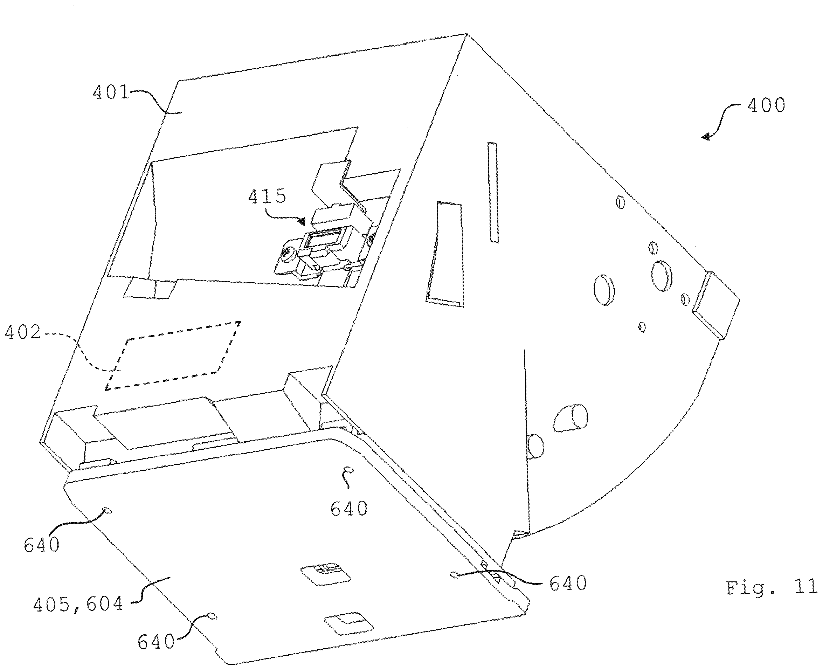

Fig. 11 zeigt in einer perspektivischen Ansicht von schräg unten eine Bevorratungsvorrichtung 400, welche aus der Münzlade 30 gemäß Fig. 10 entnommen wurde. Diese entspricht der Bevorratungsvorrichtung 400 aus Fig. 4, jedoch mit dem Unterschied, dass die Bodenplatte einen Plattenkörper 604 aufweist, welcher als zweite Führungseinrichtung fungiert. Der Plattenkörper 604 ist, wie auch bei dem Ausführungsbeispiel gemäß den Fig. 6 und 7, an dem Aufnahmebehälter 401 befestigt. Allerdings kann hier die Befestigung auch mit Hilfe von Schrauben 640 anstelle der Clipse erfolgen.

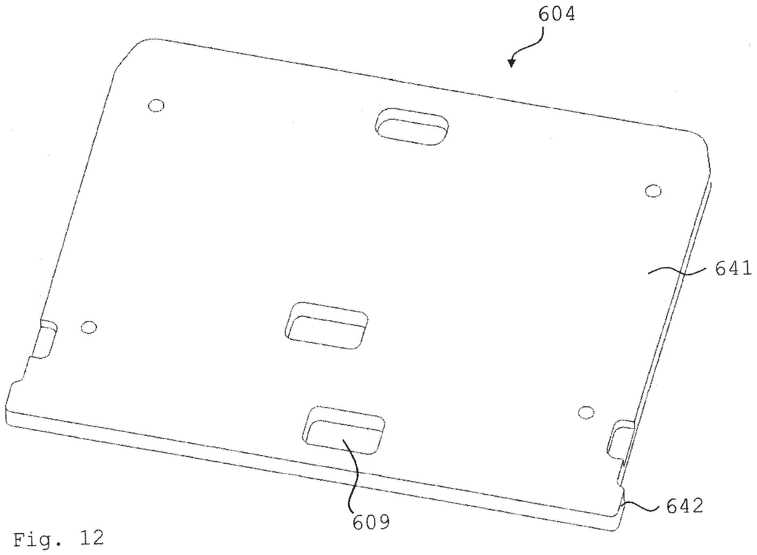

Fig. 12 zeigt perspektivisch den Plattenkörpers 604. Der Plattenkörper 604 umfasst einen Grundkörper 641, an dessen einem Ende ein verbreiteter Abschnitt 642 vorgesehen ist. Weiter umfasst der Grundkörper 641 einen Teil einer Verriegelungseinrichtung 307, nämlich eine Öffnung 609. Die Öffnung 609 kann als Durchbruch, wie gezeigt, ausgeführt sein. Alternativ kann sie als von unten zugängliche Tasche ausgebildet sein. Die Öffnung 609 bzw. die diese begrenzende Wandung bildet eine Gegenrast für eine korrespondierende, nachfolgend noch näher erläuterte Rast.

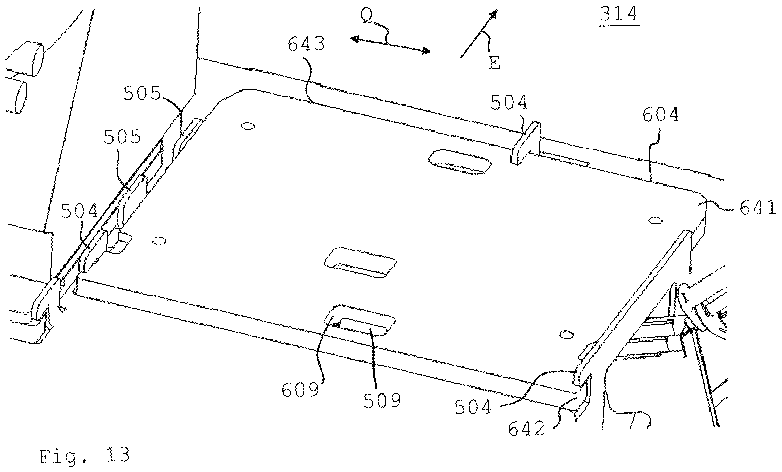

Fig. 13 zeigt in einer perspektivischen Ansicht von schräg oben die Bodenplatte 604 in einer Endlage der Bevorratungsvorrichtung 400, ohne jedoch - aus Gründen der besseren Übersicht - den Aufnahmebehälter 401 zu zeigen.

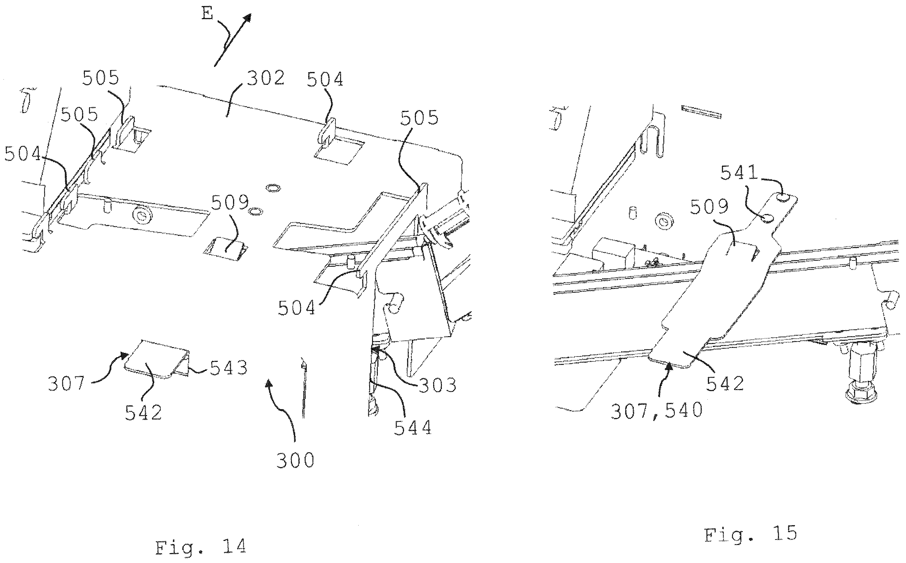

Fig. 14 zeigt die Ansicht aus Fig. 13, wobei jedoch die Bodenplatte 604 nicht dargestellt ist. Fig. 15 zeigt die Ansicht aus Fig. 14, wobei das Deckblech 302 entfernt wurde, um den Blick auf darunter liegende Komponenten der Dockingstation 300 freizugeben.

In den Fig. 14 und 15 ist insbesondere ein weiterer Teil der Verriegelungseinrichtung 307 zu erkennen. Diese umfasst nämlich zusätzlich zu der Öffnung 604 (siehe Fig. 12 und 13) einen Hebel 540, welcher in Form einer Blattfeder ausgebildet ist. Die Blattfeder 540 ist an ihrem einen Ende insbesondere mittels ein oder mehrerer Niete 541 an der Unterseite des Deckblechs 302 befestigt. Weiterhin weist die Blattfeder 540 eine Rast in Form einer aus der Haupterstreckungsebene der Blattfeder 540 herausgebogenen Nase 509 auf. Ferner umfasst die Blattfeder 540 ein freies Ende 542 (siehe Fig. 14). Das freie Ende 542 ragt in horizontaler Ebene durch eine Öffnung 543 aus einem Seitenblech 544 des Podests 303 (siehe Fig. 10 und 14) nach vorne, d.h. zu einer Bedienerperson hin, heraus. Damit liegt das freie Ende 542 in der Einschubrichtung E der Bevorratungsvorrichtung 400 vor derselben, wie in Fig. 10 gezeigt, und kann damit einfach von einer Bedienerperson erreicht und betätigt werden.

Anhand der Fig. 10, 13 und 14 wird nachfolgend das Einsetzen der Bevorratungsvorrichtung 400 aus Fig. 11 in die Münzlade 30 erläutert:
Die Bevorratungsvorrichtung 400 wird in vertikaler Richtung auf das Deckblech 302 abgesetzt, wobei dadurch der Plattenkörper 604 auf dem Deckblech 302 zum Liegen kommt. Anschließend wird die Bevorratungsvorrichtung 400 ausschließlich linear entlang der Einschubrichtung E auf dem Deckblech 302 gleitend verschoben. Die Bewegung des Plattenkörpers 604 wird dabei von den Haken 504 und den Laschen 505 geführt, welche in einer Richtung Q quer zur Einschubrichtung (siehe Fig. 13) zu beiden Seiten des Grundkörpers 641 des Plattenkörpers 604 angeordnet sind.

Bei weiterer Fortsetzung der Einschubbewegung E gelangt der Plattenkörper 604 auch in vertikaler Richtung, insbesondere in Hochrichtung, in Eingriff mit den Haken 504, wobei insbesondere zwei Haken 504 den verdickten Abschnitt 642 und insbesondere ein Haken 504 das in Richtung der Rückwand 314 weisende Ende 643 des Plattenkörpers 604. Dieser Eingriff sorgt dafür, dass ein Verkippen bzw. Verschwenken des Plattenkörpers 604 und damit der gesamten Bevorratungsvorrichtung 400 gegenüber der Dockingstation 300 gesperrt ist.

Wird die Einschubbewegung nun noch weiter fortgesetzt, so fährt der Stecker 315 in die Buchse 415 ein und stellt die elektrische Verbindung her. Gleichzeitig ist auch die Öffnung 609 über der Nase 509 angeordnet. Die Nase 509 wird zu Beginn der Einschubbewegung von dem Plattenkörper 604 überfahren und damit nach unten gedrückt. Sobald die Öffnung 609 über der Nase 509 angeordnet ist, schnappt diese federelastisch zurück und greift damit in die Öffnung 609 ein. Die Nase 509 sperrt danach eine Rückbewegung der Bevorratungsvorrichtung 400 bzw. verriegelt diese mit der Dockingstation 300 in einer Richtung entgegen der Einschubrichtung E. In dieser Verriegelungsstellung ist eine Bewegung der Bevorratungsvorrichtung 400 relativ zur Dockingstation 300 in allen sechs Freiheitsgraden gesperrt.

Um die Bevorratungsvorrichtung 400 wieder zu entnehmen, muss die Bedienerperson auf das freie Ende 542 drücken. Dies führt zu einem Verbiegen der Blattfeder 540, wodurch die Nase 509 außer Eingriff mit der Öffnung 609 in der Bodenplatte 604 gelangt. Damit kann die Bevorratungsvorrichtung 400 nun wieder entgegen der Einschubrichtung E bewegt werden.

Obwohl die vorliegende Erfindung vorstehend anhand bevorzugter Ausführungsbeispiele beschrieben wurde, ist sie darauf nicht beschränkt, sondern auf vielfältige Art und Weise modifizierbar.

### BEZUGSZEICHENLISTE

- 1: Geldautomat
- 10: Automatengehäuse
- 20: Safe
- 30: Münzlade
- 40: Benutzerschnittstelle
- 300: Dockingstation
- 301: Träger
- 302: Deckblech
- 303: Blechsockel
- 304: Schlitz
- 305: Öffnung
- 306: Kanal
- 307: Verriegelungseinrichtung
- 308: Hebel
- 309: Zapfen
- 310: Griff
- 311: Schlitz
- 312: Schlitz
- 313: Anlenkpunkt
- 314: Rückwand
- 315: Stecker
- 316: Schraube
- 317: Randbereich
- 318: erster Abschnitt
- 319: zweiter Abschnitt
- 320: V-förmiger Abschnitt
- 321: Stellung
- 322: Stellung
- 323: Schließblech
- 324: Schloss
- 400: Bevorratungsvorrichtung
- 401: Aufnahmebehälter
- 402: Abzähleinrichtung
- 403: Trichter
- 404: Schraube
- 405: Bodenplatte
- 406: Lasche
- 407: Haken
- 408: Element
- 409: Nut
- 410: erster Abschnitt
- 410a: Einführschräge
- 410b: Wandung
- 411: zweiter Abschnitt
- 412: Rand
- 413: Schraubenloch
- 414: Schraubenkopf
- 415: Buchse
- 416: Rückseite
- 417a: Wandung
- 417b: Wandung
- 504: Haken
- 505: Lasche
- 509: Nase
- 540: Hebel
- 541: Niet
- 542: Ende
- 543: Öffnung
- 544: Seitenblech
- 604: Plattenkörper
- 609: Öffnung
- 640: Schraube
- 641: Grundkörper
- 642: Abschnitt
- 643: Ende

- D: Abstand
- E: Einschubrichtung
- F: Einschubrichtung
- P1: Zwischenposition
- P2: Endposition
- Q: Querrichtung

## Patentansprüche

1. Geldautomat (1) zum Auszahlen von Bargeld an einen Kunden, mit:
einer Dockingstation (300), welche eine erste Führungseinrichtung (304, 504) aufweist,
einer Bevorratungsvorrichtung (400) zum Bevorraten von Münzgeld, welche eine zweite Führungseinrichtung (404, 604) aufweist,
wobei die erste und zweite Führungseinrichtung (304, 504; 404, 604) dazu eingerichtet sind, miteinander derart in Eingriff gebracht zu werden, dass die Bevorratungsvorrichtung (400) ausschließlich linear relativ zu der Dockingstation (300) beweglich ist, und
einer Verriegelungseinrichtung (307), welche dazu eingerichtet ist, für ein Befestigen der Bevorratungsvorrichtung (400) an der Dockingstation (300) diese in einer Endlage zu einem Ende der ausschließlich linearen Bewegung miteinander zu verriegeln, wobei:
die Verrieglungseinrichtung (307) dazu eingerichtet ist, die Bevorratungsvorrichtung (400) in die Endlage zu bewegen und dort mit der Dockingstation (300) zu verriegeln,
die Verriegelungseinrichtung (307) eine Kulisse (409) und ein korrespondierendes Kulissenelement (309) aufweist, wobei das Kulissenelement (309) für das Verriegeln der Bevorratungsvorrichtung (400) mit der Dockingstation (300) und das Bewegen der Bevorratungsvorrichtung (400) in die Endlage in der Kulisse (409) verlagerbar ist, und
die Kulisse (409) an einer Bodenplatte (405) der Bevorratungsvorrichtung (400) ausgebildet ist und ein an der Dockingstation (300) verschwenkbar gelagerter Hebel (308) das Kulissenelement (309) aufweist, wobei der Hebel (308) für das Verriegeln der Bevorratungsvorrichtung (400) mit der Dockingstation (300) verschwenkbar ist.

2. Geldautomat nach Anspruch 1,
umfassend
eine Buchse (415) und einen Stecker (315), welcher dazu eingerichtet ist, für das Herstellen einer elektrischen Verbindung in die Buchse (415) eingesteckt zu werden, wobei das Einstecken des Steckers (315) in die Buchse (415) durch die ausschließlich lineare Bewegung der Bevorratungsvorrichtung (400) relativ zu der Dockingstation (300) erfolgt.

3. Geldautomat nach Anspruch 2,
umfassend
eine Rückwand (314), wobei die Rückwand (314) eines von dem Stecker (315) und der Buchse (415) und die Bevorratungseinrichtung (400) das andere von dem Stecker (315) und der Buchse (415) aufweist.

4. Geldautomat nach Anspruch 2 oder 3,
wobei
in der Endlage der Stecker (315) in die Buchse (415) eingesteckt ist.

5. Geldautomat nach einem der Ansprüche 1 bis 4,
wobei
die Verrieglungseinrichtung (307) einen Übertotpunkt-Mechanismus aufweist.

6. Geldautomat nach Anspruch 5,
wobei
der Hebel (308) zusammen mit einem Schlitz (312) in einem Deckelement (302) der Dockingstation (300) den Übertotpunkt-Mechanismus ausbildet.

7. Geldautomat nach einem der Ansprüche 1 bis 6,
umfassend
Schlitze (304) und Zapfen (404), welche dazu eingerichtet sind, jeweils in einen der Schlitze (304) einzugreifen und/oder einen einen jeweiligen Schlitz (304) begrenzenden Randbereich (317) über zumindest einen Teil der ausschließlich linearen Bewegung der Bevorratungsvorrichtung (400) relativ zu der Dockingstation (300) hinweg zu hintergreifen, wobei die erste Führungseinrichtung eines von den Schlitzen (304) und den Zapfen (404) und die zweite Führungseinrichtung das jeweils andere von den Schlitzen (304) und den Zapfen (404) aufweist.

8. Geldautomat nach einem der Ansprüche 1 bis 7,
wobei
die Bevorratungsvorrichtung (400) einen Aufnahmebehälter (401) für das Münzgeld und die Bodenplatte (405) aufweist, welche an dem Aufnahmebehälter (401), insbesondere lösbar, befestigt ist, und/oder dass die Dockingstation (300) ein Deckelement (302) umfasst, auf welchem die Bevorratungsvorrichtung (400), insbesondere deren Bodenplatte (405), für die ausschließlich lineare Bewegung der Bevorratungsvorrichtung (400) relativ zu der Dockingstation (300) gleitend verschieblich gelagert ist.

9. Geldautomat nach Anspruch 8,
wobei
die Bodenplatte (405) eines von der ersten und zweiten Führungseinrichtung (304, 504; 404, 604) und das Deckelement (302) das andere von der ersten und zweiten Führungseinrichtung (304, 504; 404, 604) aufweist.

10. Geldautomat nach einem der Ansprüche 1 bis 9,
umfassend
ein Automatengehäuse (10) und eine Münzlade (30), welche in das Automatengehäuse (10) hinein und aus diesem heraus verschieblich beweglich vorgesehen ist, wobei die Münzlade (30) die Dockingstation (300) und die Bevorratungsvorrichtung (400) aufweist, wobei die Bevorratungsvorrichtung (400) an der Dockingstation (300) lösbar befestigt ist.

## Claims

1. An automated teller machine (1) for disbursing cash to a customer, comprising:
a docking station (300) having a first guide device (304, 504),
a storage device (400) for storing coin money, which has a second guide device (404, 604),
wherein the first and second guide devices (304, 504; 404, 604) are configured to be brought into engagement with one another in such a way that the storage device (400) is movable in an exclusively linear manner relative to the docking station (300), and
a locking device (307) which is configured, for attaching the storage device (400) to the docking station (300), to lock the storage device (400) to the docking station (300) in an end position towards an end of the exclusively linear movement, wherein:
the locking device (307) is configured to move the storage device (400) into the end position and to lock it there to the docking station (300),
the locking device (307) comprises a slotted guide (409) and a corresponding slotted guide element (309), wherein the slotted guide element (309) is displaceable in the slotted guide (409) for locking the storage device (400) to the docking station (300) and moving the storage device (400) into the end position, and
the slotted guide (409) is formed on a bottom plate (405) of the storage device (400) and wherein a lever (308) which is pivotally supported on the docking station (300) comprises the slotted guide element (309), wherein the lever (308) is pivotable for locking the storage device (400) to the docking station (300).

2. An automated teller machine according to claim 1,
comprising
a socket (415) and a plug (315) configured to be inserted into the socket (415) for establishing an electrical connection, wherein the inserting of the plug (315) into the socket (415) is accomplished by the exclusively linear movement of the storage device (400) relative to the docking station (300).

3. An automated teller machine according to claim 2,
comprising
a backplate (314), wherein the backplate (314) comprises one of the plug (315) and the socket (415), and the storage device (400) comprises the other of the plug (315) and the socket (415).

4. An automated teller machine according to claim 2 or 3,
wherein
in the end position, the plug (315) is inserted into the socket (415).

5. An automated teller machine according to one of claims 1 to 4,
wherein
the locking device (307) comprises an over-dead-center-mechanism.

6. An automated teller machine according to claim 5,
wherein
the lever (308) together with a slot (312) in a cover element (302) of the docking station (300) forms the over-dead-point-mechanism.

7. An automated teller machine according to one of claims 1 to 6,
comprising
slots (304) and pins (404) which are configured to engage a respective one of the slots (304) and/or to engage behind an edge portion (317), which confines a respective slot (304), over at least a portion of the exclusively linear movement of the storage device (400) relative to the docking station (300), wherein the first guide device comprises one of the slots (304) and the pins (404), and the second guide device comprises the other of the slots (304) and the pins (404).

8. An automated teller machine according to one of claims 1 to 7,
wherein
the storage device (400) comprises a storage container (401) for the coin money and the bottom plate (405), which is mounted, in particular detachably, to the storage container (401), and/or wherein the docking station (300) comprises a cover element (302), on which the storage device (400), in particular the bottom plate (405) thereof, is slidably supported for the exclusively linear movement of the storage device (400) relative to the docking station (300).

9. An automated teller machine according to claim 8,
wherein
the bottom plate (405) comprises one of the first and second guide devices (304, 504; 404, 604), and the cover member (302) comprises the other of the first and second guide devices (304, 504; 404, 604).

10. An automated teller machine according to one of claims 1 to 9,
comprising
a machine housing (10) and a coin tray (30) which is provided to be slidably movable into and out of the machine housing (10), wherein the coin tray (30) comprises the docking station (300) and the storage device (400), wherein the storage device (400) is detachably mounted to the docking station (300).

## Revendications

1. Guichet automatique bancaire (1) destiné à distribuer des espèces à un client, comprenant :
une station d'accueil (300) comportant un premier dispositif de guidage (304, 504),
un dispositif de stockage (400) destiné à stocker de la monnaie sous forme de pièces, comportant un second dispositif de guidage (404, 604),
dans lequel les premier et second dispositifs de guidage (304, 504 ; 404, 604) sont conçus pour être amenés en prise l'un avec l'autre d'une manière telle que le dispositif de stockage (400) puisse se déplacer d'une manière exclusivement linéaire par rapport à la station d'accueil (300), et
un dispositif de verrouillage (307) qui est conçu, à des fins de fixation du dispositif de stockage (400) à la station d'accueil (300), pour verrouiller le dispositif de stockage (400) à la station d'accueil (300) dans une position d'extrémité en direction d'une extrémité du déplacement exclusivement linéaire, dans lequel :
le dispositif de verrouillage (307) est conçu pour déplacer le dispositif de stockage (400) dans la position d'extrémité et pour le verrouiller à la station d'accueil (300) au niveau de cette position,
le dispositif de verrouillage (307) comprend un guide fendu (409) et un élément de guidage fendu correspondant (309), dans lequel l'élément de guidage fendu (309) peut être déplacé dans le guide fendu (409) à des fins de verrouillage du dispositif de stockage (400) à la station d'accueil (300) et de déplacement du dispositif de stockage (400) dans la position d'extrémité, et
le guide fendu (409) est formé sur une plaque inférieure (405) du dispositif de stockage (400) et dans lequel un levier (308) qui est supporté pivotant sur la station d'accueil (300) comprend l'élément de guidage fendu (309), dans lequel le levier (308) peut pivoter à des fins de verrouillage du dispositif de stockage (400) à la station d'accueil (300).

2. Guichet automatique bancaire selon la revendication 1,
comprenant
une prise femelle (415) et une fiche (315) conçue pour être introduite dans la prise femelle (415) à des fins d'établissement d'une connexion électrique, dans lequel l'introduction de la fiche (315) dans la prise femelle (415) est accomplie par le déplacement exclusivement linéaire du dispositif de stockage (400) par rapport à la station d'accueil (300).

3. Guichet automatique bancaire selon la revendication 2,
comprenant
une plaque arrière (314), dans lequel la plaque arrière (314) comprend l'une de la fiche (315) et de la prise femelle (415), et le dispositif de stockage (400) comprend l'autre de la fiche (315) et de la prise femelle (415).

4. Guichet automatique bancaire selon la revendication 2 ou la revendication 3,
dans lequel
dans la position d'extrémité, la fiche (315) est introduite dans la prise femelle (415).

5. Guichet automatique bancaire selon l'une des revendications 1 à 4,
dans lequel
le dispositif de verrouillage (307) comprend un mécanisme à point mort.

6. Guichet automatique bancaire selon la revendication 5,
dans lequel
le levier (308), conjointement avec une fente (312) ménagée dans un élément de recouvrement (302) de la station d'accueil (300), forme le mécanisme à point mort.

7. Guichet automatique bancaire selon l'une des revendications 1 à 6,
comprenant
des fentes (304) et des broches (404) qui sont conçues pour venir en prise avec une fente respective des fentes (304) et/ou pour venir en prise derrière une partie de bord (317), qui confine une fente respective (304), sur au moins une partie du déplacement exclusivement linéaire du dispositif de stockage (400) par rapport à la station d'accueil (300), dans lequel le premier dispositif de guidage comprend les unes des fentes (304) et des broches (404), et le second dispositif de guidage comprend les autres des fentes (304) et des broches (404).

8. Guichet automatique bancaire selon l'une des revendications 1 à 7,
dans lequel
le dispositif de stockage (400) comprend un contenant de stockage (401) destiné à la monnaie sous forme de pièces et la plaque inférieure (405), qui est montée, en particulier de manière démontable, sur le contenant de stockage (401), et/ou dans lequel la station d'accueil (300) comprend un élément de recouvrement (302), sur lequel le dispositif de stockage (400), en particulier sa plaque inférieure (405), est supporté de manière coulissante par rapport au déplacement exclusivement linéaire du dispositif de stockage (400) par rapport à la station d'accueil (300).

9. Guichet automatique bancaire selon la revendication 8,
dans lequel
la plaque inférieure (405) comprend l'un des premier et second dispositifs de guidage (304, 504 ; 404, 604), et l'élément de recouvrement (302) comprend l'autre des premier et second dispositifs de guidage (304, 504 ; 404, 604).

10. Guichet automatique bancaire selon l'une des revendications 1 à 9,
comprenant
un boîtier de guichet (10) et un plateau pour pièces (30) prévu pour pouvoir se déplacer de manière coulissante dans le boîtier de guichet (10) et hors de ce dernier, dans lequel le plateau pour pièces (30) comprend la station d'accueil (300) et le dispositif de stockage (400), le dispositif de stockage (400) étant monté de manière démontable sur la station d'accueil (300).
